(19) Europäisches Patentamt
European Patent Office
Office européen des brevets

(11) **EP 4 576 670 A1**

(12) **EUROPEAN PATENT APPLICATION**

(43) Date of publication:
**25.06.2025 Bulletin 2025/26**

(21) Application number: **24207355.9**

(22) Date of filing: **18.10.2024**

(51) International Patent Classification (IPC):
**H04L 9/40** *(2022.01)*     *H04L 9/32* *(2006.01)*

(52) Cooperative Patent Classification (CPC):
**H04L 63/104;** H04L 9/3263; H04L 63/0823

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.12.2023   CN 202311766498**

(71) Applicant: **Beijing Xiaomi Mobile Software Co., Ltd.**
**Beijing 100085 (CN)**

(72) Inventor: **PENG, Jianxin**
**Beijing, 100085 (CN)**

(74) Representative: **Dehns Germany Partnerschaft mbB**
**Theresienstraße 6-8**
**80333 München (DE)**

(54) **METHOD AND APPARATUS FOR DEVICE SHARING CONNECTION, ELECTRONIC DEVICE, STORAGE MEDIUM, AND PROGRAM PRODUCT**

(57)   The present disclosure relates to a technical field of communication, and in particular provides methods and apparatuses for device sharing connection, an electronic device, a storage medium, and a computer program product. A method for device sharing connection includes: obtaining, in response to that a connection request message sent by a target device is received, a first team account for the target device according to the connection request message; obtaining, when the first team account matches a second team account for the user device, a first device role of the target device; sending, when determining that the first device role and a second device role of the user device meet a role combination condition, response information to the target device to execute device authentication; and creating, when determining that the device authentication succeeds, a sharing connection with the target device. In this way, the device sharing connection may be created between different devices for the same team account, which solves the problem that the device sharing connection cannot be created between the devices logged in by different user accounts, and improves the applicable range of the device sharing connection.

FIG. 8

## Description

### TECHNICAL FIELD

The present disclosure relates to a technical field of communication, and in particular to methods and apparatuses for device sharing connection, an electronic device, a storage medium, and a computer program product.

### BACKGROUND

In some scenarios for intelligence devices sharing (for example, a scenario for home devices sharing), multiple devices logged in by the same user account may usually form a mutual trust ring, and any two devices in the mutual trust ring may execute device authentication and sharing connection based on the account. The sharing connection refers to a connection which is created based on an interconnection function between the devices and is for the devices sharing something, for example, screen projection.

However, the device sharing connection can only be created between devices logged in by the same user account, and an applicable range of the device sharing connection is relatively small.

### SUMMARY

An objective of embodiments of the present disclosure is to provide methods and apparatuses for device sharing connection, an electronic device, a storage medium, and a computer program product, to improve the applicable range of the device sharing connection.

In an aspect, an embodiment of the present disclosure provides a method for device sharing connection. The method is applied to a user device and includes: obtaining, in response to that a connection request message sent by a target device is received, a first team account for the target device according to the connection request message; obtaining, when the first team account matches a second team account for the user device, a first device role of the target device; sending, when determining that the first device role and a second device role of the user device meet a role combination condition, response information to the target device to execute device authentication; and creating, when determining that the device authentication succeeds, a sharing connection with the target device.

In an implementation, determining that the first device role and a second device role of the user device meet a role combination condition, includes: determining, when the first device role includes a controller and the second device role includes a controlee, that the first device role and the second device role meet the role combination condition; or determining, when the first device role includes a controlee and the second device role includes a controller, that the first device role and the second device role meet the role combination condition.

In an implementation, the first team account is determined according to a first team certificate included in the connection request message; the first team certificate further includes a first certificate time and a first member set; and the first member set includes user accounts for respective team members corresponding to the first team account; and the second team account is determined according to a second team certificate of the user device; the second team certificate further includes a second certificate time and a second member set; and the second member set includes user accounts for respective team members corresponding to the second team account.

In an implementation, sending response information to the target device to execute device authentication include: executing certificate verification for the first team certificate of the target device; when determining that the certificate verification succeeds, the first certificate time is not later than the second certificate time, and the second member set includes a first user account for the target device and a second user account for the user device, determining that the device authentication succeeds; or when determining that the certificate verification succeeds and the first certificate time is later than the second certificate time, updating the second team certificate and determining a new second member set from the updated second team certificate; and when the new second member set includes the first user account for the target device and the second user account for the user device, determining that the device authentication succeeds.

In an implementation, the method further includes: when determining that the certificate verification succeeds, generating a transmission key; and communicating data with the target device through the transmission key.

In an implementation, before receiving the connection request message sent by the target device, the method further includes: sending a team account creation request to a server, so that the server generates the second team account based on the team account creation request; receiving the second team account returned by the server; and sending a team invitation notification to the target device, so that the target device sends a team joining request to the server and receives the first team account returned by the server based on the second team account.

In an implementation, before receiving the connection request message sent by the target device, the method further includes: when determining that a team invitation notification is received, sending a team joining request to a server, and receiving the second team account that is returned by the server based on the team joining request; or when determining that the team information update notification sent by the server is received, sending a team information update request to the server, and receiving the second team account that is returned by the server based on the team information update request.

In an aspect, an embodiment of the present disclosure provides a method for device sharing connection. The method is applied to a target device and includes: sending a connection request message; where the connection request message is for determining a first team account for the target device; executing, when determining that a response message returned by a user device based on the connection request message is received, device authentication for the user device, where the response message is sent in response to determining that the first team account matches a second team account for the user device and a first device role of the target device and a second device role of the user device meet a role combination condition; and creating, when determining that the device authentication succeeds, a sharing connection with the user device.

In an implementation, the first team account is determined according to a first team certificate included in the connection request message; the first team certificate further includes a first certificate time and a first member set; and the first member set includes user accounts for respective team members corresponding to the first team account; and the second team account is determined according to a second team certificate of the user device; the second team certificate further includes a second certificate time and a second member set; and the second member set includes user accounts for respective team members corresponding to the second team account.

In an implementation, executing device authentication for the user device includes: executing certificate verification for the second team certificate of the user device; when determining that the certificate verification succeeds, the first certificate time is not earlier than the second certificate time, and the first member set includes a first user account for the target device and a second user account for the user device, determining that the device authentication succeeds; or when determining that the certificate verification succeeds and the first certificate time is earlier than the second certificate time, updating the first team certificate, and determining a new first member set from the updated first team certificate; and when the new first member set includes the first user account for the target device and the second user account for the user device, determining that the device authentication succeeds.

In an aspect, an embodiment of the present disclosure provides an apparatus for device sharing connection. The apparatus is applied to a user device and includes: a receiving unit, configured to obtain, in response to that a connection request message sent by a target device is received, a first team account for the target device according to the connection request message; a matching unit, configured to obtain, when the first team account matches a second team account for the user device, a first device role of the target device; an authentication unit, configured to send, when determining that the first device role and a second device role of the user device meet a role combination condition, response information to the target device to execute device authentication; and a connection unit, configured to create, when determining that the device authentication succeeds, a sharing connection with the target device.

In an implementation, the authentication unit is configured to: determine, when the first device role includes a controller and the second device role includes a controlee, that the first device role and the second device role meet the role combination condition; or determine, when the first device role includes the controlee and the second device role includes the controller, that the first device role and the second device role meet the role combination condition.

In an implementation, the first team account is determined according to a first team certificate included in the connection request message; the first team certificate further includes a first certificate time and a first member set; and the first member set includes user accounts for respective team members corresponding to the first team account; and the second team account is determined according to a second team certificate of the user device; the second team certificate further includes a second certificate time and a second member set; and the second member set includes user accounts for respective team members corresponding to the second team account.

In an implementation, the authentication unit is configured to: execute certificate verification for the first team certificate of the target device; when determining that the certificate verification succeeds, the first certificate time is not later than the second certificate time, and the second member set includes a first user account for the target device and a second user account for the user device, determine that the device authentication succeeds; or when determining that the certificate verification succeeds and the first certificate time is later than the second certificate time, update the second team certificate and determine a new second member set from the updated second team certificate; and when the new second member set includes the first user account for the target device and the second user account for the user device, determine that the device authentication succeeds.

In an implementation, the authentication unit is further configured to: when determining that the certificate verification succeeds, generate a transmission key; and communicate data with the target device through the transmission key.

In an implementation, the receiving unit is further configured to: send a team account creation request to a server, so that the server generates the second team account based on the team account creation request; receive the second team account returned by the server; and send a team invitation notification to the target device, so that the target device sends a team joining request to the server and receives the first team account returned by the server based on the second team account.

In an implementation, the receiving unit is further configured to: when determining that a team invitation notification is received, send a team joining request to a server, and receive the second team account that is returned by the server based on the team joining request; or when determining that the team information update notification sent by the server is received, send a team information update request to the server, and receive the second team account that is returned by the server based on the team information update request.

In an aspect, an embodiment of the present disclosure provides an apparatus for device sharing connection. The apparatus is applied to a target device and includes: a sending unit, configured to send a connection request message; where the connection request message is for determining a first team account for the target device; an authentication unit, configured to execute, when determining that a response message returned by a user device based on the connection request message is received, device authentication for the user device, where the response message is sent in response to determining that the first team account matches a second team account for the user device and a first device role of the target device and a second device role of the user device meet a role combination condition; and a connection unit, configured to create, when determining that the device authentication succeeds, a sharing connection with the user device.

In an implementation, the first team account is determined according to a first team certificate included in the connection request message; the first team certificate further includes a first certificate time and a first member set; and the first member set includes user accounts for respective team members corresponding to the first team account; and the second team account is determined according to a second team certificate of the user device; the second team certificate further includes a second certificate time and a second member set; and the second member set includes user accounts for respective team members corresponding to the second team account.

In an implementation, the authentication unit is configured to: execute certificate verification for the second team certificate of the user device; when determining that the certificate verification succeeds, the first certificate time is not earlier than the second certificate time, and the first member set includes a first user account for the target device and a second user account for the user device, determine that the device authentication succeeds; or when determining that the certificate verification succeeds and the first certificate time is earlier than the second certificate time, update the first team certificate, and determine a new first member set from the updated first team certificate; and when the new first member set includes the first user account for the target device and the second user account for the user device, determine that the device authentication succeeds.

In an aspect, an embodiment of the present disclosure provides an electronic device, including: a processor; and a memory storing computer instructions; where the computer instructions are configured to cause a processor to execute steps of the method provided in any one of various optional implementations of the device sharing connection as described above.

In an aspect, an embodiment of the present disclosure provides a storage medium, storing computer instructions; where the computer instructions are configured to cause a computer to execute steps of the method provided in any one of various optional implementations of the device sharing connection as described above.

In an aspect, an embodiment of the present disclosure provides a computer program product, where a computer executes the computer program instructions, to implement steps of the method provided in any one of various optional implementations of the device sharing connection as described above.

The method for device sharing connection in the embodiment of the present disclosure includes: obtaining, in response to a connection request message sent by a target device is received, a first team account for the target device according to the connection request message; obtaining, when the first team account matches a second team account for the user device, a first device role of the target device; sending, when determining that the first device role and a second device role of the user device meet a role combination condition, response information to the target device to execute device authentication; and creating, when determining that the device authentication succeeds, a sharing connection with the target device. In this way, the device sharing connection may be created between different devices for the same team account, which solves the problem that the device sharing connection cannot be created between the devices logged in by different user accounts, and improves the applicable range of the device sharing connection.

## BRIEF DESCRIPTION OF DRAWINGS

To illustrate technical solutions of specific implementations of the present disclosure or of the prior art more clearly, accompanying drawings to be used in the description of the specific implementations or the prior art will be described briefly below. The accompanying drawings described below are some implementations of the present disclosure. Those skilled in the art may also obtain other drawings according to these accompanying drawings without creative efforts.

FIG. 1 is an example diagram of a scenario for home device sharing in a conventional technology.

FIG. 2 is an interaction diagram of a method for obtaining a team certificate in an embodiment of the present disclosure.

FIG. 3 is a flowchart of a method for device sharing connection in an embodiment of the present disclosure.

FIG. 4 is an interaction diagram of a device screening method in an embodiment of the present disclosure.

FIG. 5 is an interaction diagram of another device screening method in an embodiment of the present disclosure.

FIG. 6 is an interaction diagram of a method for updating a certificate in an embodiment of the present disclosure.

FIG. 7 is an interaction diagram of a method for verifying a certificate in an embodiment of the present disclosure.

FIG. 8 is an example diagram of a sharing connection scenario for a home device in an embodiment of the present disclosure.

FIG. 9 is a structural block diagram of an apparatus for device sharing connection in an embodiment of the present disclosure.

FIG. 10 is a structural block diagram of another apparatus for device sharing connection in an embodiment of the present disclosure.

FIG. 11 is a schematic structural diagram of an electronic device in an embodiment of the present disclosure.

## DETAILED DESCRIPTION

The technical solutions of the present disclosure will be described clearly and completely below in combination with the accompanying drawings. The described implementations are a part of and not all of the implementations of the present disclosure. Based on the implementations of the present disclosure, all other implementations obtained by those skilled in the art without creative efforts fall within the protection scope of the present disclosure. In addition, technical features involved in different embodiments of the present disclosure described below may be combined with each other as long as they do not conflict with each other.

Firstly, a part of terms involved in the embodiments of the present disclosure are described, to facilitate understanding by those skilled in the art.

A terminal device may be a mobile terminal, a fixed terminal, or a portable terminal, for example, a mobile phone, a station, a unit, a device, a multimedia computer, a multimedia tablet, an Internet node, a communicator, a desktop computer, a laptop computer, a notebook computer, a netbook computer, a tablet computer, a personal communication system device, a personal navigation device, a personal digital assistant, an audio/video player, a digital camera/-camcorder, a positioning device, a television receiver, a radio broadcast receiver, an electronic book device, a game device, or any combination thereof, including accessories and peripherals of these devices, or any combination thereof the accessories and peripherals. It can be also contemplated that the terminal device can support any type of interfaces for the user (for example, a wearable device), etc.

A server may be an independent physical server, may also be a server cluster or a distributed system formed by multiple physical servers, or may also be a cloud server that provides basic cloud computing services such as a cloud service, a cloud database, cloud computing, a cloud function, cloud storage, a network service, cloud communication, a middleware service, a domain name service, a security service, a big data and artificial intelligence platform, etc.

In some scenarios for intelligence devices sharing (for example, a scenario for home devices sharing), multiple devices logged in by a same user account may usually form a mutual trust ring, and any two devices in the mutual trust ring may execute device authentication and sharing connection by the account, for example, screen projection.

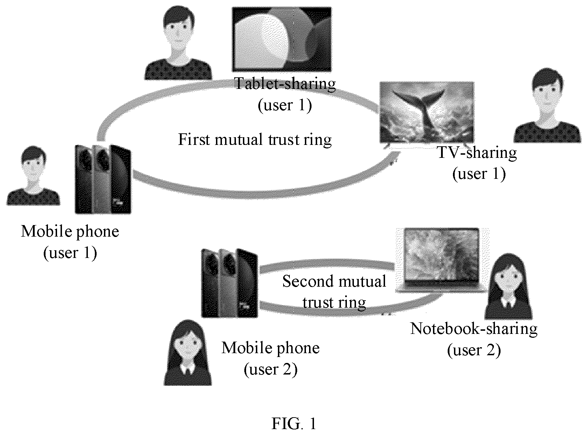

Referring to FIG. 1, FIG. 1 is an example diagram of a scenario for home device sharing in a conventional technology. Home (or one family) includes two home members, that is, a user 1 and a user 2. Multiple devices logged in by a user account of the user 1 form a first mutual trust ring, and multiple devices logged in by a user account of the user 2 form a second mutual trust ring.

However, the device sharing connection may only be created between devices logged in by the same user account. For example, in FIG. 1, the device sharing connection is not supported between the television in the first mutual trust ring and the mobile phone in the second mutual trust ring, such that the applicable range of the device sharing connection is relatively small.

Based on the defects in the above related technologies, embodiments of the present disclosure provide methods and apparatuses for device sharing connection, an electronic device, and a storage medium, to improve the applicable range of the device sharing connection.

An embodiment of the present disclosure provides a method for device sharing connection. The method may be applied to an electronic device. A type of the electronic device is not limited in the present disclosure, and may be any device type suitable for implementation, for example, a terminal device, a server, etc., which will not be repeated in the present disclosure.

In the embodiment of the present disclosure, a user (for example, a home member) firstly creates a target team account (one target team account corresponds to one target team) by a server, the server generates a target team certificate including the target team account, the user invites at least one other user (for example, other home member) to joining the target team for the target team account, the server updates the target team certificate based on the joined new user to obtain a target team certificate including the target team account and each of user accounts, and then devices of target team members in the target team execute the device sharing connection based on the target team certificate stored by each of the devices.

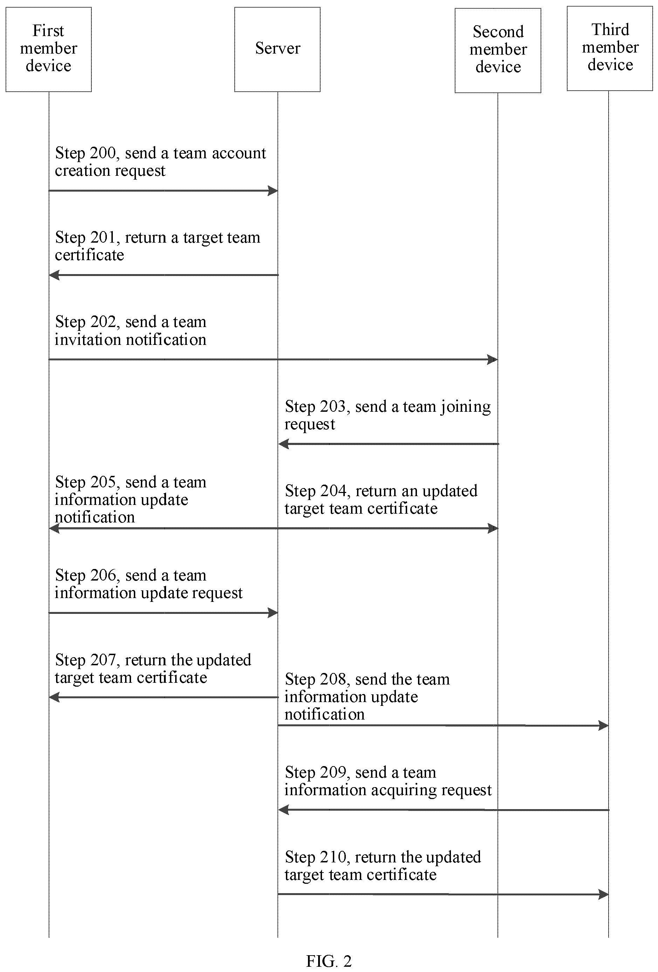

Processes of generating and obtaining a team certificate are described below with reference to FIG. 2. FIG. 2 is an interaction diagram of a method for obtaining a team certificate in an embodiment of the present disclosure. The method is described below with reference to FIG. 2. The specific implementation process of the method includes following steps 200-210.

At step 200, a first member device sends a team account creation request to a server.

The team creation request includes a first member account (for example, an application account) of a first team member. It should be noted that any user may use a device of the user to initiate a team account creation request to the server. In an implementation, the user may be referred to as the first team member, the device of the user may be referred to as the first member device, and the account of the user may be referred to as the first member account.

Optionally, the team creation request may further include an identification of at least one sharing device (for example, a name or code of the device) allowed to be shared by the first team member. The first member device may be any device, such as a server or a terminal device. As an example, the team may be home, a learning group, a company department, etc.

At step 201, the server returns a target team certificate to the first member device.

In an implementation, the server generates a target team account (for example, a home account) based on the team account creation request, and creates a target team certificate based on the target team account and the first member account.

Creating the target team certificate based on the target team account and the first member account, may include any one of the following manners.

In a first manner, the target team certificate including the target team account and the first member account is directly generated.

In a second manner, hash calculation is executed for the target team account to obtain a hash value of the account, and the target team certificate including the first member account and the hash value of the account is generated.

Optionally, the target team certificate may further include an identification of at least one sharing device (for example, a mobile phone, a tablet, etc.) allowed to be shared by the first team member.

At step 202, the first member device sends a team invitation notification to a second member device.

Optionally, the team invitation notification may be a short message or a message including an invitation link. In an actual application, the invitation link may be sent to the second member device in any manner; for example, the team invitation notification may also be sent (for example, pushed) by the server, which is not limited herein.

It should be noted that the second member device is logged in by a second member account of a second team member. In an implementation, the second team member may be a further user different from the above user, an account of the further user may be referred to as the second member account, and a device of the further user may be referred to as the second member device.

At step 203, the second member device sends a team joining request to the server.

In an implementation, the second member device sends the team joining request to the server by clicking on the invitation link.

The team joining request includes the second member account of the second team member. Optionally, the team joining request may further include an identification of at least one sharing device allowed to be shared by the second team member.

At step 204, the server returns an updated target team certificate to the second member device.

In an implementation, the server obtains the second member account in the team joining request, updates the target team certificate according to the second member account, and sends the updated target team certificate to the second member device.

The updated target team certificate includes the target team account, the first member account, and the second member account. Optionally, the target team certificate may further include the identification of the at least one sharing device allowed to be shared by the first team member, and may further include the identification of the at least one sharing device allowed to be shared by the second team member.

At step 205, the server sends a team information update notification to the first member device.

At step 206, the first member device sends a team information update request to the server.

At step 207, the server returns the updated target team certificate to the first member device.

At step 208, the server sends the team information update notification to a third member device.

It should be noted that both the second member device and the third member device are logged in by the second member account, and therefore, after the second team member joins the target team through the second member device, the server further synchronizes the updated target team certificate to another device logged in by the second member account, that is, the third member device.

At step 209, the third member device sends a team information acquiring request to the server.

At step 210, the server returns the updated target team certificate to the third member device.

The target team being home is taken as an example below for description. A home certificate (that is, the target team certificate) for home (or one family) may include a home account or home identification (ID) (that is, the target team account), a certificate generation time (that is, the certificate time), a sharing user list (that is, the member set), and a sharing device list (that is, a sharing device set). As an example, the home certificate includes:

a home ID: 1234560;
a certificate generation time: 2023.01.01.10.00;
a sharing user list, including:

a user 1;
a user 2; and
a user 3;

a sharing device list, including:

-device IDs (DIDs); and
--user IDs (UIDs).

Further, when the server receives a certificate modification request sent by a certain member device for the target team certificate, the server may further modify the target team certificate according to the certificate modification request, and return the updated target team certificate to the member device; and the server further sends a team information update notification to other member devices, and sends, based on the team information update requests of the other member devices, the updated target team certificate to each of the member devices respectively.

In the embodiment of the present disclosure, the target team certificate may be created based on the team account creation request of the member device, the target team certificate may be updated when the member set of the target team changes or the sharing device set of each of team members changes, for example, joining (that is, newly increasing), deleting, and modifying of a certain member device, and the updated target team certificate is synchronized to all member devices for the target team account.

In the embodiment of the present disclosure, after the target team certificate is generated, each of different member devices may execute the device authentication and sharing connection according to the target team certificate stored by the member device.

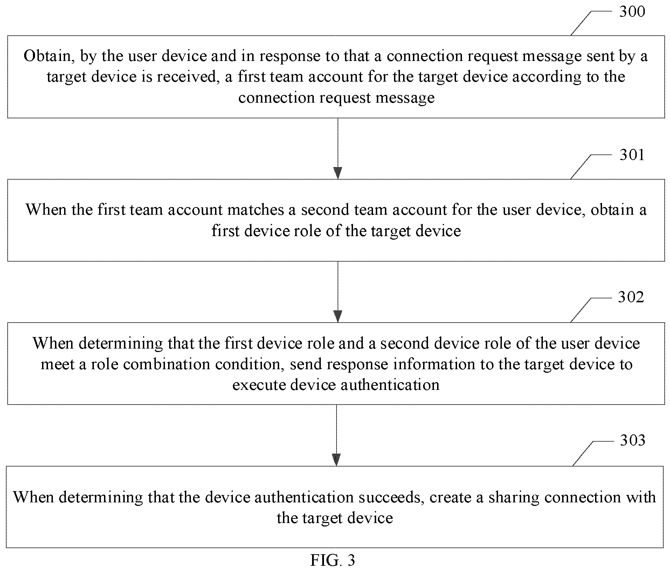

With reference to FIG. 2 and FIG. 3, the method for device sharing connection is described below by taking a device sharing connection between a user device and a target device an example. It should be noted that both the user device and the target device may be any two member devices in a certain target team, for example, the target device and the user device may be any two of the first member device, the second member device, and the third member device in FIG. 1. For another example, the target device is the first member device and the user device is the second member device, or the target device is the third member device and the user device is the first member device.

For ease of distinguishing description, the team certificate, the target team account, the member set, the sharing device set, and the device role of the target device are sequentially below referred to as: a first team certificate, a first team account, a first member set, a first sharing device set, and a first device role; and the team certificate, the target team account, the member set, the sharing device set, and the device role of the user device are sequentially below referred to as: a second team certificate, a second team account, a second member set, a second sharing device set, and a second device role.

As an example, the first team account is a target team account for a research and development department (i.e., the target team) of a certain company. The first member set for the first team account is all members in the research and development department, and the first sharing device set for the first team account is mobile phones and conference devices of all the members in the research and development department.

As another example, the first team account is a target team account for a certain home (i.e., the target team). The first member set for the first team account is all home members in the home, and the first sharing device set for the first team account is mobile phones and audio and video devices (for example, televisions, tablets, computers, etc.) of all the home members in the home.

As another example, the first team account is a target team account for a certain class (i.e., the target team). The first member set for the first team account is all students and teachers in the class, and the first sharing device set for the first team account is mobile phones and audio and video devices (for example, televisions) of all the students and teachers in the class.

FIG. 3 is a flowchart of a method for device sharing connection of an embodiment of the present disclosure. The specific implementation process of the method includes following steps 300-303.

At step 300, in response to that a connection request message sent by a target device is received, the user device obtains a first team account for the target device according to the connection request message.

The connection request message is for determining the first team account for the target device. The first team account is determined according to a first team certificate included in the connection request message. Optionally, the connection request message may be further for determining the first device role.

In an implementation, the connection request message includes the first team certificate, and the first team certificate includes the first team account or the hash value of the first team account. After the target device sends the connection request message, the user device receives the connection request message, obtains the first team certificate included in the connection request message, and obtains the first team account included in the first team certificate, or obtains the hash value of the first team account in the first team certificate and obtains the first team account based on the hash value.

In an implementation, the connection request message includes the first team certificate and the first device role, and the first team certificate includes the first team account or the hash value of the first team account. After the target device sends the connection request message, the user device receives the connection request message, obtains the first team certificate and the first device role included in the connection request message, and obtains the first team account included in the first team certificate, or obtains the hash value of the first team account in the first team certificate and obtains the first team account based on the hash value.

Optionally, the connection request message may be sent in real time, or may be sent periodically, or may be sent when a broadcast condition (for example, a broadcast time or a communication condition) is met. In an actual application, the broadcast condition may be configured according to an actual application scenario, which is not limited herein.

The first team certificate may further include a first certificate time (that is, the certificate time in FIG. 1) and a first member set (that is, the member set in FIG. 1). The first certificate time is a latest generation time or update time of the first team certificate, and the first member set includes user accounts (that is, the member accounts in FIG. 1) of team members for the first team account.

In an implementation, the user device is the first member device in FIG. 2, and the target device is the second member device in FIG. 2. The user device may also execute the following steps:

sending a team account creation request to the server, so that the server generates a second team account based on the team account creation request; receiving the second team account returned by the server; and sending a team invitation notification to the target device, so that the target device sends a team joining request to the server, and receives a first team account that is returned by the server based on the second team account.

In an implementation, the user device is the first member device in FIG. 2, and the target device is the third member device in FIG. 2. The user device may also execute the following steps:

sending a team account creation request to the server, so that the server generates a second team account based on the team account creation request; receiving the second team account returned by the server; and sending a team invitation notification to the second member device, so that the second member device sends a team joining request to the server, and receives a first team account that is returned by the server based on the second team account. When the target device determines that the team information update notification sent by the server is received, the target device sends a team information update request to the server and receives the first team account returned by the server based on the team information update request.

In an implementation, the target device is the first member device in FIG. 2, and the user device may be the second member device or the third member device in FIG. 2. The target device may execute the following steps:

sending a team account creation request to the server, so that the server generates a first team account based on the team account creation request, and sending a team invitation notification to the other devices (for example, the second member device and the third member device).

When the user device is the second member device in FIG. 2, the user device may further execute the following steps: when determining that the team invitation notification is received, sending a team joining request to the server, and receiving a second team account that is returned by the server based on the team joining request.

When the user device is the third member device in FIG. 2, the user device may further execute the following steps: when determining that the team information update notification sent by the server is received, sending a team information update request to the server, and receiving the second team account that is returned by the server based on the team information update request.

At step 301, when the first team account matches a second team account for the user device, a first device role of the target device is obtained.

In an implementation, a second team account for the user device is obtained, and when determining that the first team account is same as the second team account, it is determined that the team accounts for the user device and the target device are the same and belong to the same target team, the first device role of the target device is obtained.

Optionally, whether the first team account matches the second team account may be also determined, according to whether the first team account and the second team account include a same field or whether a matching degree between the first team account and the second team account is higher than a configured matching threshold. In an actual application, a matching manner may be configured according to an actual application scenario, which is not limited herein. In this way, devices that the devices and the user device belong to the same team may be filtered out through the team accounts.

The first device role may be obtained in any one of the following manners.

In a first manner, when the connection request message includes a first device role, the first device role included in the connection request message is obtained.

In a second manner, when the connection request message does not include the first device role, a role request message is sent to the target device, a role response message returned by the target device is received, and the first device role included in the role response message is obtained.

In an actual application, a manner of obtaining the first device role may also be configured according to the actual application scenario, which is not limited herein.

At step 302, when determining that the first device role and a second device role of the user device meet a role combination condition, response information is sent to the target device to execute device authentication.

In an implementation, when the first device role includes a controller and the second device role includes a controlee, it is determined that the first device role and the second device role meet the role combination condition; or, when the first device role includes a controlee and the second device role includes a controller, it is determined that the first device role and the second device role meet the role combination condition.

Both the first device role and the second device role are device roles, and are roles configured for devices.

In an implementation, the device roles include the controller and the controlee (that is, the device). The same device may be correspondingly provided with multiple roles, the first device role may be the controller and/or the controlee, and the second device role may also be the controller and/or the controlee. When the device role indicates the controller, the device may be used as a controlling machine to control running of the other devices. When the device role indicates the controlee, the device may be used as a controlled device, to run according to a control instruction of another controlling device (that is, the controller).

This is because only when the two devices includes both a controller and a device, the two devices may meet the role combination condition, and form a networking relationship, so that a device sharing connection may be created. When device roles for the two devices are same, for example, both the device roles are devices or controllers, the networking relationship cannot be formed.

As an example, home (that is, a target team) for a home account (that is, a target team account) includes multiple devices, that is, a television (TV), a tablet, a notebook, and a mobile phone. The device role of the TV indicates a controlee, the device roles of the tablet and the notebook include a controller and a controlee, the device role of the mobile phone indicates a controller, and the mobile phone may create a device sharing connection with the TV, the tablet, and the notebook respectively.

In an actual application, both the device role and the role combination condition may be configured according to the actual application scenario, which is not limited herein.

In an implementation, sending, by the user device, the response information to the target device to execute the device authentication, may include the following steps A1-C1.

At step A1, certificate verification is executed for the first team certificate of the target device.

In an implementation, the user device executes the certificate verification for the target device according to the first team certificate, and the target device also executes the certificate verification for the user device according to the second team certificate.

Further, when it is determined that the certificate verification succeeds, a transmission key is generated; and data is communicated with the target device through the transmission key. Specifically, after both the certificate verification for the user device and the certificate verification for the target device succeed, any subsequently transmitted data may be encrypted and transmitted through the transmission key.

At step B1, when determining that the certificate verification succeeds, the first certificate time is not later than the second certificate time, and the second member set includes a first user account for the target device and a second user account for the user device, it is determined that the device authentication succeeds.

It should be noted that when the first certificate time is not later than the second certificate time, it indicates that the second team certificate is updated after the first team certificate, that is, the first team certificate includes old version of information, and the second team certificate includes new version of information and includes more accurate information, so that a non-security problem caused by the user device not downloading the latest team certificate may be reduced.

At step C1, when determining that the certificate verification succeeds and the first certificate time is later than the second certificate time, the second team certificate is updated and a new second member set is determined from the updated second team certificate; and when the new second member set includes the first user account for the target device and the second user account for the user device, it is determined that the device authentication succeeds.

It should be noted that when the first certificate time is later than the second certificate time, it indicates that the second team certificate includes the old version of information, and therefore, the second team certificate needs to be updated, thereby reducing the non-security problem caused by the user device not downloading the latest team certificate.

Similarly, executing, by the target device, the device authentication for the user device, may include the following steps.

The certificate verification is executed for the second team certificate of the user device; when it is determined that the certificate verification succeeds, the first certificate time is not earlier than the second certificate time, and the first member set includes a first user account for the target device and a second user account for the user device, it is determined that the device authentication succeeds; or, when it is determined that the certificate verification succeeds and the first certificate time is earlier than the second certificate time, the first team certificate is updated, and a new first member set is determined from the updated first team certificate; and when the new first member set includes the first user account for the target device and the second user account for the user device, it is determined that the device authentication succeeds.

At step 303, when determining that the device authentication succeeds, a sharing connection is created with the target device.

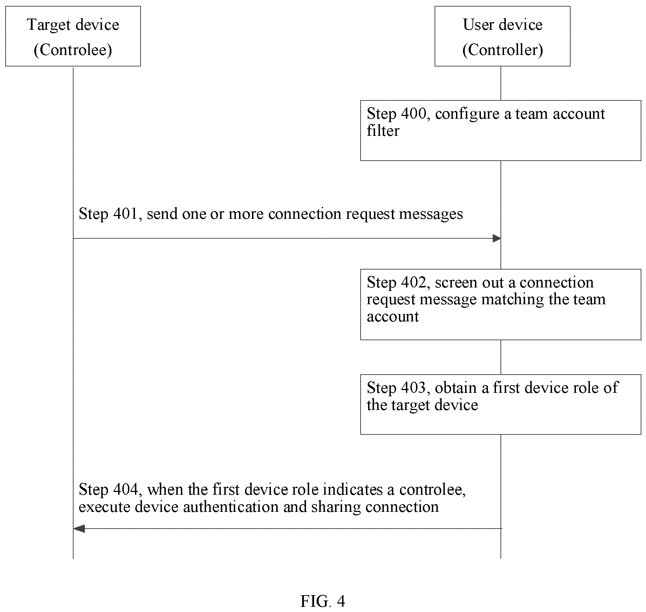

Screening for the user device in the above embodiment is described below with reference to FIG. 4. FIG. 4 is an interaction diagram of a device screening method. In FIG. 4, a device role of the user device indicates a controller, a device role of the target device indicates a controlee, and a process of the method includes the following steps 400-404.

At step 400, the user device configures a team account filter.

At step 401, the target device sends one or more connection request messages to the user device.

At step 402, the user device filters the received connection request messages by the team account filter, to screen out a connection request message matching the team account.

The team account filter is configured according to an account filtering condition, to filter out a team account matching the second team account for the user device.

At step 403, the user device obtains a first device role of the target device.

At step 404, when the first device role indicates a controlee, device authentication and sharing connection are executed for the target device.

Specifically, executing the steps 400-404 may refer to the above steps 300-303, which will be not repeated herein.

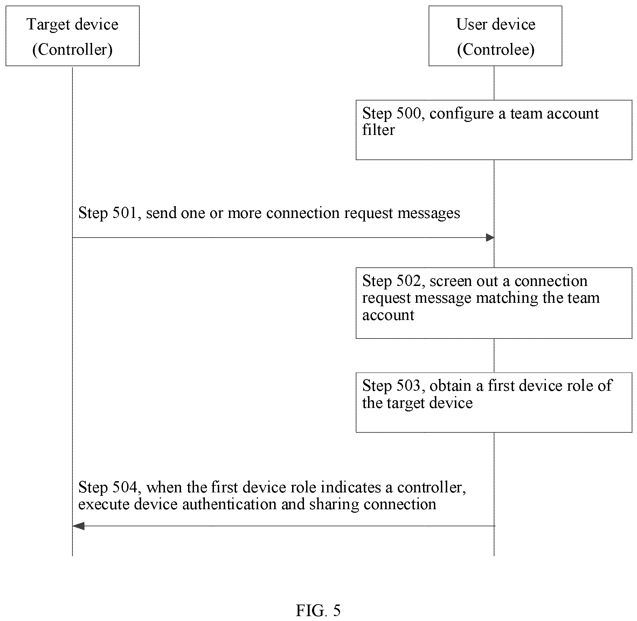

Screening for the user device is described below with reference to FIG. 5. FIG. 5 is an interaction diagram of another device screening method. In FIG. 5, a device role of the target device indicates a controller, a device role of the user device indicates a controlee, and a process of the method includes the following steps 500-504.

At step 500, the user device configures a team account filter.

At step 501, the target device sends one or more connection request messages to the user device.

At step 502, the user device filters the received connection request messages by the team account filter, to screen out a connection request message matching the team account.

At step 503, the user device obtains a first device role of the target device.

At step 504, when the first device role indicates a controller, device authentication and sharing connection are executed for the target device.

Specifically, executing the steps 500-504 may refer to the above steps 300-303, which will be not repeated herein.

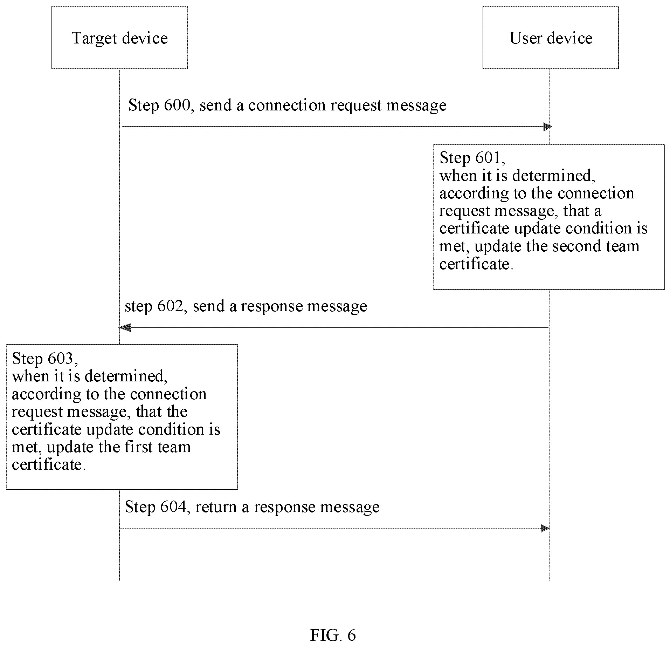

The certificate update process in the above embodiment is described below with reference to FIG. 6. FIG. 6 is an interaction diagram of a method for updating a certificate. The specific implementation process of the method includes the following steps 600-604.

At step 600, the target device sends a connection request message to the user device.

In an implementation, the connection request message includes a first team certificate and a first device role of Alice (that is, the team member). The first team certificate includes a first date (i.e., the first certificate time), a first user list (i.e., the first member set), and a first device list (i.e., the first sharing device set).

At step 601, when it is determined, according to the connection request message, that a certificate update condition is met, the user device updates the second team certificate.

In an implementation, when it is determined, according to the first team certificate and the second team certificate, that team accounts for the user device and the target device are matched and the certificate verification succeeds (that is, the certificates are legal), it is determined, according to a comparison result between the first certificate time and the second certificate time, whether to update the second team certificate.

It should be noted that when the certificate update condition is not met, the step 601 may not be executed.

At step 602, when the first team certificate includes the user accounts for the user device and the target device, the user device sends a response message to the target device.

The response message may be a message used for the device authentication and sharing connection. The response message includes the second team certificate and the second device role of Bob (that is, the team member). The second team certificate includes a second date (i.e., the second certificate time), a second user list (i.e., the second member set), and a second device list (i.e., the second sharing device set).

At step 603, when it is determined, according to the connection request message, that the certificate update condition is met, the target device updates the first team certificate.

It should be noted that when the certificate update condition is not met, the step 603 may not be executed.

At step 604, when the first team certificate includes the user accounts for the user device and the target device, the target device returns a response message to the user device.

In this way, the certificate times in the team certificates of the user device and the target device may be compared, so as to avoid a non-security problem caused by one of the target device and the user device using an old version of team certificate instead of the updated latest version of team certificate. After the user device and the target device exchange information of the team certificates, when each of the team certificates of the user device and the target device includes the user account for each other, it indicates that the user device and the target device have a legal and valid team account sharing relationship (for example, a home account sharing relationship) and the security authentication succeeds; otherwise, it is determined that the security authentication fails.

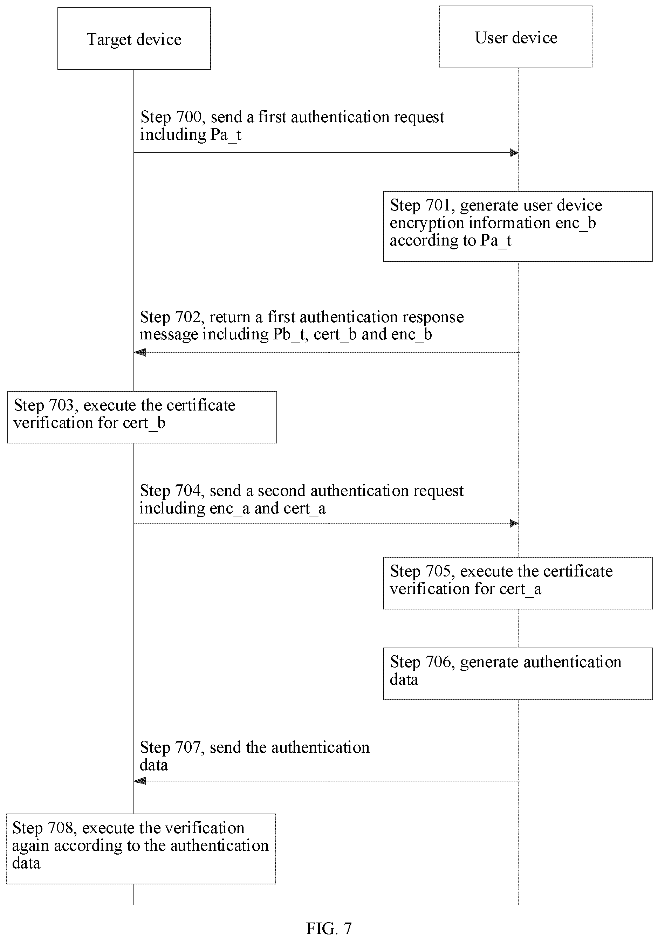

The method for verifying a certificate in the above embodiment is specifically described below with reference to FIG. 7. FIG. 7 is an interaction diagram of a method for verifying a certificate. The implementation process of the method includes following steps 700-708.

At step 700, the target device sends a first authentication request including a first temporary public key Pa_t to the user device.

It should be noted that a first temporary key pair is provided for the target device, and includes the first temporary public key Pa_t and a first temporary private key Sa_t. A second temporary key pair is provided for the user device, and includes a second temporary public key Pb_t and a second temporary private key Sb_t.

At step 701, the user device generates user device encryption information enc_b according to the first temporary public key Pa_t.

In an implementation, the step 701 may include the following steps A2-C2.

At step A2, the user device encrypts the first temporary public key Pa_t and the second temporary private key Sb_t to obtain a key value K.

Specifically, the key value K may be determined by the following formula:

$$K = \mathrm{ECDH}\,(\mathrm{Pa\_t},\,\mathrm{Sb\_t})$$

The ECDH is an encryption algorithm, that is, an elliptic curve diffie-hellman key exchange algorithm.

At step B2, the user device execute a signature according to the first temporary public key Pa_t, the second temporary public key Pb_t, and a second certificate private key Sb_L, to obtain user device signature information sign_b.

It should be noted that a first certificate key pair is provided for the target device, and includes a first certificate public key Pa_L and a first certificate private key Sa_L. A second certificate key pair is provided for the user device, and includes a second certificate public key Pb_L and the second certificate private key Sb_L.

The user device signature information sign_b may be determined by the following formula:

$$\mathrm{sign\_b} = \mathrm{sign}\,(\mathrm{Pa\_t} + \mathrm{Pb\_t},\,\mathrm{Sb\_L})$$

The sign is a signature algorithm.

At step C2, the user device generates user device encryption information enc_b according to the user device signature information and the key value K.

In an implementation, the user device encryption information enc_b may be generated by the following formula:

$$\mathrm{enc\_b} = \mathrm{enc}\,(\mathrm{sign\_b},\,\mathrm{K})$$

The enc is an encryption algorithm.

At step 702, the user device returns a first authentication response message to the target device.

In an implementation, the first authentication response message includes the second temporary public key Pb_t, a second team certificate cert_b, and the user device encryption information enc_b.

At step 703, the target device executes certificate verification for the second team certificate cert_b.

In an implementation, the step 703 may include the following steps A3-H3.

At step A3, the target device encrypts the second temporary public key Pb_t and the first temporary private key Sa_t to obtain a key value K.

Specifically, the key value K may be determined by the following formula:

$$K = \mathrm{ECDH}\,(\mathrm{Pb\_t},\,\mathrm{Sa\_t})$$

At step B3, the target device executes the certificate verification for the second team certificate according to a secondary certificate.

In an implementation, the certificate verification may be executed for the second team certificate cert_b by a formula verify Sign (Cert2, cert_b). For example, the secondary certificate is a Xiaomi Smart Home secondary certificate.

The verify Sign is an algorithm for certificate verification.

At step C3, when the certificate verification succeeds, the target device obtains the second certificate public key Pb_L, a second device identification did_b, and a hash value homeidhash_b of the second team account from the second team certificate cert_b.

At step D3, the target device generates a hash value homeidhash_a of the first team account according to the first team account homeid_a and the second device identification did_b.

In an implementation, the hash value homeidhash_a of the first team account may be determined by the following formula:

$$\mathrm{homeidhash\_a} = \mathrm{hash}\,(\mathrm{homeid\_a},\,\mathrm{did\_b});$$

where the hash is a hash algorithm.

At step E3, when the homeidhash_a matches the homeidhash_b, the target device decrypts the user device encryption information enc_b according to the key value K, to obtain the user device signature information sign_b.

In an implementation, there is sign_b = dec (enc_b, K), and the dec is a decryption algorithm.

At step F3, the target device verifies the user device signature information sign_b according to the second certificate public key Pb_L.

In an implementation, the sign_b may be verified by verify (sign_b, Pb_L).

When the verification for the user device signature information sign_b succeeds, it is determined that the verification for the second team certificate succeeds.

At step G3, when it is determined that the verification succeeds, the target device executes a signature according to the first temporary public key Pa_t, the second temporary public key Pb_t, and the first certificate private key Sa_L, to obtain target device signature information sign_a.

The target device signature information sign_a may be determined by the following formula:

$$\mathrm{sign\_a} = \mathrm{sign}\,(\mathrm{Pa\_t} + \mathrm{Pb\_t},\,\mathrm{Sa\_L})$$

At step H3, the target device encrypts the target device signature information sign_a according to the key value K, to obtain target device encryption information enc_a.

In an implementation, the target device encryption information enc_a may be generated by the following formula:

$$\mathrm{enc\_a} = \mathrm{enc}\,(\mathrm{sign\_a},\,K)$$

At step 704, the target device sends a second authentication request including the target device encryption information enc_a and the first team certificate cert_a to the user device.

At step 705, the user device executes the certificate verification for the first team certificate.

In an implementation, the step 705 may include the following steps A4-E4.

At step A4: the user device executes the certificate verification for the first team certificate according to the secondary certificate.

In an implementation, the first team certificate cert_a may be verified by a formula verify Sign (Cert2, cert_a).

At step B4, when the certificate verification succeeds, the user device obtains the first certificate public key Pa_L, the first device identification did_a, and the hash value homeidhash_a of the first team account from the first team certificate cert_a.

At step C4, the user device generates the hash value homeidhash_b of the second team account according to the second team account homeid_b and the first device identification did_a.

The homeidhash_b is determined may be the following formula:

$$homeidhash\_b = hash\ (homeid\_b, did\_a)$$

At step D4, when the homeidhash_a matches the homeidhash_b, the user device decrypts the target device encryption information enc_a according to the key value K, to obtain the target device signature information sign_a.

In an implementation, there is sign_a = dec (enc_a, K), and the dec is a decryption algorithm.

At step E4, the user device verifies the target device signature information sign_a according to the first certificate public key Pa_L.

In an implementation, the sign_a may be verified by verify (sign_a, Pa_L). When the verification for the target device signature information sign_a succeeds, it is determined that the verification for the first team certificate succeeds.

Further, in order to improve the security and the accuracy of the certificate verification, the following steps 706-708 may be used for further authentication.

At step 706, the user device generates authentication data.

In an implementation, the step 706 may include the following steps A5-B5.

At step A5, the user device generates a transmission key according to the key value K.

In an implementation, the transmission key session_key may be generated by the following formula:

$$session\_key = HKDF\ (K, salt, first\ character\ string + second\ character\ string)$$

The HKDF is a key generation algorithm and the salt is a salt value; the first character string is generated by the target device; the second character string is generated by the user device; and each of the salt, the first character string, and the second character string may be randomly generated, may be a fixed value, or may be configured according to an actual application scenario, which is not limited herein.

At step B5, the user device generates the authentication data according to the transmission key session_key and the second temporary public key Pb_t.

In an implementation, the authentication data authentication_data may be generated by the following formula:

$$authentication\_data = aes\_gcm\_and\_tag\ (session\_key, K+Pb\_t);$$

where the aes_gcm_and _tag is an encryption algorithm.

At step 707, the user device sends the authentication data to the target device.

At step 708, the target device executes the verification again according to the authentication data.

In an implementation, the step 708 may include the following steps A6-B6.

At step A6, the target device decrypts the authentication data to obtain decryption data.

In an implementation, the decryption data decrypt_data may be obtained by the following formula:

$$decrypt\_data = aes\_gcm\_auth\_decrypt\ (session\_key, authentication\_data);$$

where the aes_gcm_auth _decrypt is a decryption algorithm.

At step B6, the target device executes the verification again according to the decryption data decrypt_data and K+Pb_t.

In an implementation, when the decrypt_data is consistent with the K+Pb_t, it is determined that the verification succeeds again.

In this way, after the transmission key session_key is generated, any subsequent transmission data may be encrypted by the session_key and then transmitted, to ensure the security of the data transmission.

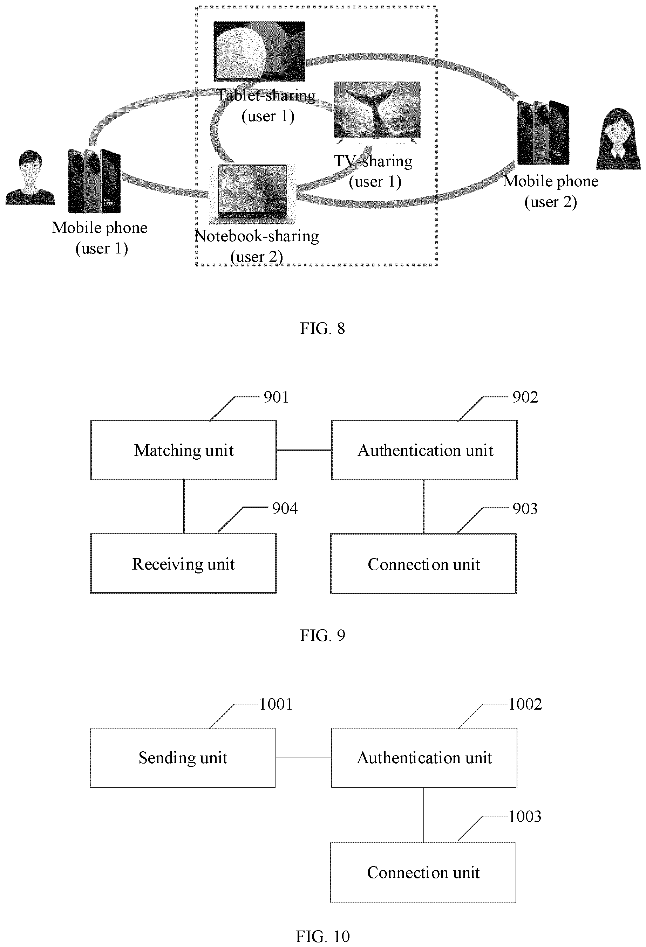

A sharing connection scenario for devices in home is exemplary described below with reference to FIG. 8. FIG. 8 is an example diagram of a sharing connection scenario for a home device. In FIG. 8, the home includes a user 1 and a user 2, an account of the user 1 logs in a mobile phone, a tablet, and a television of the user 1, and an account of the user 2 logs in a mobile phone and a notebook of the user 2, so that a home account may be created for the home, and a home certificate including the home account, the account of the user 1, and the account of the user 2 account is generated. Further, when the device role of each of the mobile phones is a controller, and the device role of each of the other devices is a controlee, both the user 1 and the user 2 may use respective mobile phones, by home certificates stored in the respective mobile phones, to create sharing connections with the tablet, the television, and the notebook respectively.

In the embodiments of the present disclosure, the team certificate including the team account and the member account of each of the corresponding team members is generated, and any two member devices in the team may execute the device authentication and sharing connection through the team certificate, so that the problem that the device sharing connection cannot be created between the devices logged in by different user accounts is solved, which simplifies tedious operations of the device sharing connection, and improves the applicable range of the device sharing connection.

Furthermore, after the verification for the team certificate succeeds, a transmission key for secure communication is generated, and the transmission data is encrypted and transmitted through the transmission key; for example, the team certificates and the team accounts for different devices may be encrypted and transmitted according to the transmission key, so that the security of the data transmission is improved; further, whether a valid home account relationship exists between different devices or not may also be determined according to the member set and the certificate time in the team certificate, which avoids a problem of a determination error caused by old version of information, and improves the accuracy and security of the device sharing connection.

The user information (including but not limited to user device information, user personal information, etc.) and data (including but not limited to data for analysis, data for storage, data for display, etc.) involved in the present disclosure are information and data that are authorized by the user or fully authorized by various parties, and collection, use, and processing of related data need to comply with related laws and regulations and standards of related countries and regions, and are provided with corresponding operation portals for the user to select authentication or rejection.

Based on the same inventive concept, an embodiment of the present disclosure further provide an apparatus for device sharing connection. Since the principle of the apparatus solving the problem is similar to the method for device sharing connection, the implementation of the apparatus may refer to the implementation of the method, and repetitive content thereof will not be described again. The apparatus may be applied to an electronic device. A type of the electronic device is not limited in the present disclosure, and may be any device type suitable for implementation, for example, a terminal device, a server, etc., which will not be repeated in the present disclosure.

Referring to FIG. 9, FIG. 9 is a structural block diagram of an apparatus for device sharing connection in an embodiment of the present disclosure. In some implementations, the apparatus for device sharing connection in examples of the present disclosure includes:

a receiving unit 904, configured to obtain, in response to that a connection request message sent by a target device is received, a first team account for the target device according to the connection request message;

a matching unit 901, configured to obtain, when the first team account matches a second team account for the user device, a first device role of the target device;

an authentication unit 902, configured to send, when determining that the first device role and a second device role of the user device meet a role combination condition, response information to the target device to execute device authentication; and

a connection unit 903, configured to create, when determining that the device authentication succeeds, a sharing connection with the target device.

In an implementation, the authentication unit 902 is configured to:

determine, when the first device role includes a controller and the second device role includes a controlee, that the first device role and the second device role meet the role combination condition; or

determine, when the first device role includes a controlee and the second device role includes a controller, that the first device role and the second device role meet the role combination condition.

In an implementation, the first team account is determined according to a first team certificate included in the connection request message; the first team certificate further includes a first certificate time and a first member set; and the first member set includes user accounts for respective team members corresponding to the first team account; and the second team account is determined according to a second team certificate of the user device; the second team certificate further includes a second certificate time and a second member set; and the second member set includes user accounts for respective team members corresponding to the second team account.

In an implementation, the authentication unit 902 is configured to:

execute certificate verification for the first team certificate of the target device;

when determining that the certificate verification succeeds, the first certificate time is not later than the second certificate time, and the second member set includes a first user account for the target device and a second user account for the user device, determine that the device authentication succeeds; or

when determining that the certificate verification succeeds and the first certificate time is later than the second certificate time, update the second team certificate and determine a new second member set from the updated second team certificate; and when the new second member set includes the first user account for the target device and the second user account for the user device, determine that the device authentication succeeds.

In an implementation, the authentication unit 902 is further configured to:

when determining that the certificate verification succeeds, generate a transmission key; and
communicate data with the target device through the transmission key.

In an implementation, the receiving unit is further configured to:

send a team account creation request to a server, so that the server generates the second team account based on the team account creation request;
receive the second team account returned by the server; and
send a team invitation notification to the target device, so that the target device sends a team joining request to the server and receives the first team account returned by the server based on the second team account.

In an implementation, the receiving unit is further configured to:

when determining that a team invitation notification is received, send a team joining request to a server, and receive the second team account that is returned by the server based on the team joining request; or
when determining that the team information update notification sent by the server is received, send a team information update request to the server, and receive the second team account that is returned by the server based on the team information update request.

Referring to FIG. 10, FIG. 10 is a structural block diagram of another apparatus for device sharing connection in an embodiment of the present disclosure. In some implementations, the apparatus for device sharing connection in examples of the present disclosure includes:

a sending unit 1001, configured to send a connection request message; where the connection request message is for determining a first team account for the target device;
an authentication unit 1002, configured to execute, when determining that a response message returned by a user device based on the connection request message is received, device authentication for the user device, where the response message is sent in response to determining that the first team account matches a second team account for the user device and a first device role of the target device and a second device role of the user device meet a role combination condition; and
a connection unit 1003, configured to create, when determining that the device authentication succeeds, a sharing connection with the user device.

In an implementation, the first team account is determined according to a first team certificate included in the connection request message; the first team certificate further includes a first certificate time and a first member set; and the first member set includes user accounts for respective team members corresponding to the first team account; and the second team account is determined according to a second team certificate of the user device; the second team certificate further includes a second certificate time and a second member set; and the second member set includes user accounts for respective team members corresponding to the second team account.

In an implementation, the authentication unit 1002 is configured to:

execute certificate verification for the second team certificate of the user device;
when determining that the certificate verification succeeds, the first certificate time is not earlier than the second certificate time, and the first member set includes a first user account for the target device and a second user account for the user device, determine that the device authentication succeeds; or
when determining that the certificate verification succeeds and the first certificate time is earlier than the second certificate time, update the first team certificate, and determine a new first member set from the updated first team certificate; and when the new first member set includes the first user account for the target device and the second user account for the user device, determine that the device authentication succeeds.

The apparatus for device sharing connection in the embodiment of the present disclosure: obtains, in response to that a connection request message sent by a target device is received, a first team account for the target device according to the connection request message; obtains, when the first team account matches a second team account for the user device, a first device role of the target device; sends, when determining that the first device role and a second device role of the user device meet a role combination condition, response information to the target device to execute device authentication; and creates, when determining that the device authentication succeeds, a sharing connection with the target device. In this way, the device sharing connection may be created between different devices for the same team account, which solves the problem that the device sharing connection cannot be created between the devices logged in by different user accounts, and improves the applicable range of the device sharing connection.

An embodiment of the present disclosure provides an electronic device, including:

a processor; and

a memory storing computer instructions; where the computer instructions are configured to cause the processor to execute the method of any one of the above implementations.

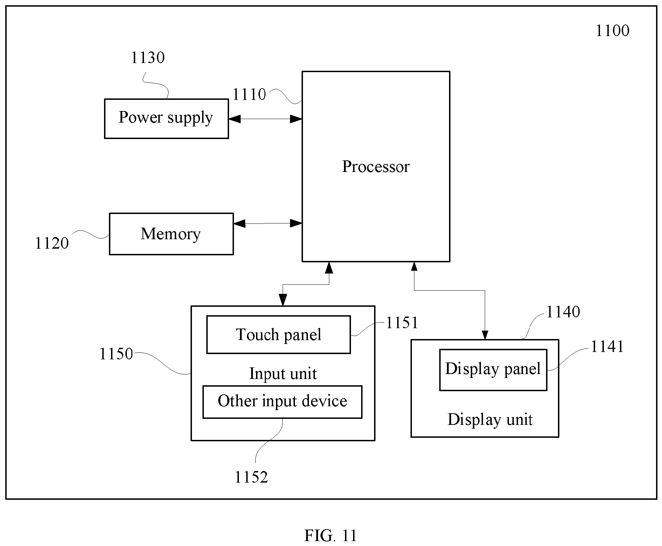

An embodiment of the present disclosure provides a storage medium, storing computer instructions; where the computer instructions are configured to cause a computer to execute the method of any one of the above implementations. FIG. 11 shows a schematic structural diagram of an electronic device 1100. Referring to FIG. 11, the electronic device 1100 includes a processor 1110 and a memory 1120. Optionally, the electronic device 1100 may also include a power supply 1130, a display unit 1140, and an input unit 1150.

The processor 1110 is a control center of the electronic device 1100, shares and connects various components by using various interfaces and lines, and executes various functions of the electronic device 1100 by running or executing a software program and/or data stored in the memory 1120, so as to execute overall monitoring for the electronic device 1100.

In the embodiment of the present disclosure, the processor 1110 executes, when invoking the computer program stored in the memory 1120, the steps in the above embodiments.

Optionally, the processor 1110 may include one or more processing units; preferably, the processor 1110 may integrate an application processor and a modem processor. The application processor mainly processes an operating system, user interfaces, applications, and the like, and the modem processor mainly processes wireless communication. It may be understood that the modem processor may not be integrated into the processor 1110. In some embodiments, the processor and the memory may be implemented on a single chip. In some embodiments, the processor and the memory may also be separately implemented on separate chips.

The memory 1120 may mainly include a program storage area and a data storage area, where the program storage area may store an operating system, various applications, and the like; and the data storage area may store data created according to use of the electronic device 1100, and the like. In addition, the memory 1120 may include a high-speed random access memory, and may also include a non-volatile memory, such as at least one magnetic disk storage device, a flash memory device, other volatile solid-state storage devices, etc.

The electronic device 1100 further includes a power supply 1130 (for example, a battery) that supplies power for each of the components. The power supply may be logically connected to the processor 1110 by a power management system, to implement functions such as charging, discharging, and power consumption by the power management system.

The display unit 1140 may be configured to display information input by the user or information provided to the user, various menus of the electronic device 1100, and the like. In the embodiment of the present disclosure, the display unit 1140 is mainly configured to display a display interface of each of applications in the electronic device 1100 and an object displayed in the display interface, such as a text, a picture, etc. The display unit 1140 may include a display panel 1141. The display panel 1141 may be configured in a form of a liquid crystal display (LCD), an organic light-emitting diode (OLED), or the like.

The input unit 1150 may be configured to receive information input by a user, such as numbers, characters, etc. The input unit 1150 may include a touch panel 1151 and other input devices 1152. The touch panel 1151, also referred to as a touch screen, may collect touch operations executed by the user on or near the touch panel 1151 (for example, operations executed by the user on or near the touch panel 1151 by using any suitable object or accessory, such as a finger, a touch pen, etc.).

Specifically, the touch panel 1151 may detect touch operations of users, detect signals caused by the touch operations, convert the signals into touch point coordinates, send the touch point coordinates to the processor 1110, receive and execute commands sent by the processor 1110. In addition, the touch panel 1151 may be implemented in various types, such as resistive, capacitive, infrared, surface acoustic wave, etc. The other input devices 1152 may include, but are not limited to, one or more of a physical keyboard, a function key (such as, a volume control key, a power-on/power-off key, etc.), a trackball, a mouse, a joystick, etc.

Of course, the touch panel 1151 may cover the display panel 1141. After the touch panel 1151 detects a touch operation on or near the touch panel 1151, the touch panel 1151 transmits the touch operation to the processor 1110 to determine the type of the touch event, and then the processor 1110 provides a corresponding visual output on the display panel 1141 according to the type of the touch event. In FIG. 11, although the touch panel 1151 and the display panel 1141 are used as two independent components to implement input and output functions of the electronic device 1100, in certain embodiments, the touch panel 1151 and the display panel 1141 may be integrated to implement the input and output functions of the electronic device 1100.

The electronic device 1100 may also include one or more sensors, such as a pressure sensor, a gravity acceleration sensor, a proximity light sensor, and the like. Of course, according to requirements in specific applications, the electronic device 1100 may further include other components such as a camera. Since these components are not key components used in the embodiments of the present disclosure, they are not shown in FIG. 11 and will not be described in detail.

It can be understood by those skilled in the art that FIG. 11 is merely an example of the electronic device, does not constitute a limitation on the electronic device, and, compared to the illustrated structure, may include more or less components, may be combined with certain components, or may include different components.

For ease of description, the above individual parts are divided into individual modules (or units) according to their functions and described separately. Of course, the functions of the individual modules (or units) may be implemented in one or more pieces of software or hardware when implementing the present disclosure.

The above implementations are merely examples for clear description, and are not intended to limit the implementations. For those skilled in the art, other different forms of changes or variations may be made based on the above description. It is not necessary and impossible to exhaustively list all implementations herein. The obvious changes or variations introduced thereby are still within the protection scope created by the present disclosure.

**Claims**

1. A method for device sharing connection, applied to a user device and comprising:

   obtaining (300), in response to that a connection request message sent by a target device is received, a first team account for the target device according to the connection request message;
   obtaining (301), when the first team account matches a second team account for the user device, a first device role of the target device;
   sending (302), when determining that the first device role and a second device role of the user device meet a role combination condition, response information to the target device to execute device authentication; and
   creating (303), when determining that the device authentication succeeds, a sharing connection with the target device.

2. The method of claim 1, wherein the role combination condition comprises:

   the first device role indicates a controller and the second device role indicates a controlee; or
   the first device role indicates a controlee and the second device role indicates a controller

3. The method of claim 1, wherein the first team account is determined according to a first team certificate comprised in the connection request message; the first team certificate further comprises a first certificate time and a first member set; and the first member set comprises user accounts for respective team members corresponding to the first team account; and
   wherein the second team account is determined according to a second team certificate of the user device; the second team certificate further comprises a second certificate time and a second member set; and the second member set comprises user accounts for respective team members corresponding to the second team account.

4. The method of claim 3, wherein the sending (302) response information to the target device to execute device authentication, comprises:

   executing certificate verification for the first team certificate of the target device;
   when determining that the certificate verification succeeds, the first certificate time is not later than the second certificate time, and the second member set comprises a first user account for the target device and a second user account for the user device, determining that the device authentication succeeds; or
   when determining that the certificate verification succeeds and the first certificate time is later than the second certificate time,

   updating the second team certificate and determining a new second member set from the updated second team certificate; and
   when the new second member set comprises the first user account for the target device and the second user account for the user device, determining that the device authentication succeeds.

5. The method of claim 4, further comprising:

generating a transmission key when determining that the certificate verification succeeds; and
communicating data with the target device through the transmission key.

6. The method of any one of claims 1 to 5, wherein before receiving the connection request message sent by the target device, the method further comprises:

sending a team account creation request to a server, so that the server generates the second team account based on the team account creation request;
receiving the second team account returned by the server; and
sending a team invitation notification to the target device, so that the target device sends a team joining request to the server and receives the first team account returned by the server based on the second team account.

7. The method of any one of claims 1 to 5, wherein before receiving the connection request message sent by the target device, the method further comprises:

when determining that a team invitation notification is received, sending a team joining request to a server, and receiving the second team account that is returned by the server based on the team joining request; or
when determining that a team information update notification sent by the server is received, sending a team information update request to the server, and receiving the second team account that is returned by the server based on the team information update request.

8. A method for device sharing connection, applied to a target device and comprising:

sending a connection request message; wherein the connection request message is for determining a first team account for the target device;
executing, when determining that a response message returned by a user device based on the connection request message is received, device authentication for the user device, wherein the response message is sent in response to determining that the first team account matches a second team account for the user device and a first device role of the target device and a second device role of the user device meet a role combination condition; and
creating, when determining that the device authentication succeeds, a sharing connection with the user device.

9. The method of claim 8, wherein the first team account is determined according to a first team certificate comprised in the connection request message; the first team certificate further comprises a first certificate time and a first member set; and the first member set comprises user accounts for respective team members corresponding to the first team account; and
wherein the second team account is determined according to a second team certificate of the user device; the second team certificate further comprises a second certificate time and a second member set; and the second member set comprises user accounts for respective team members corresponding to the second team account.

10. The method of claim 9, wherein the executing device authentication for the user device, comprises:

executing certificate verification for the second team certificate of the user device;
when determining that the certificate verification succeeds, the first certificate time is not earlier than the second certificate time, and the first member set comprises a first user account for the target device and a second user account for the user device, determining that the device authentication succeeds; or
when determining that the certificate verification succeeds and the first certificate time is earlier than the second certificate time,

updating the first team certificate and determining a new first member set from the updated first team certificate; and
when the new first member set comprises the first user account for the target device and the second user account for the user device, determining that the device authentication succeeds.

11. An apparatus for device sharing connection, applied to a user device and comprising:

a receiving unit (904), configured to obtain, in response to that a connection request message sent by a target device is received, a first team account for the target device according to the connection request message;
a matching unit (901), configured to obtain, when the first team account matches a second team account for the user device, a first device role of the target device;

an authentication unit (902), configured to send, when determining that the first device role and a second device role of the user device meet a role combination condition, response information to the target device to execute device authentication; and

a connection unit (903), configured to create, when determining that the device authentication succeeds, a sharing connection with the target device.

12. The apparatus of claim 11, wherein the first team account is determined according to a first team certificate comprised in the connection request message; the first team certificate further comprises a first certificate time and a first member set; and the first member set comprises user accounts for respective team members corresponding to the first team account; and

wherein the second team account is determined according to a second team certificate of the user device; the second team certificate further comprises a second certificate time and a second member set; and the second member set comprises user accounts for respective team members corresponding to the second team account.

13. An apparatus for device sharing connection, applied to a target device and comprising:

a sending unit (1001), configured to send a connection request message; wherein the connection request message is for determining a first team account for the target device;

an authentication unit (1002), configured to execute, when determining that a response message returned by a user device based on the connection request message is received, device authentication for the user device, wherein the response message is sent in response to determining that the first team account matches a second team account for the user device and a first device role of the target device and a second device role of the user device meet a role combination condition; and

a connection unit (1003), configured to create, when determining that the device authentication succeeds, a sharing connection with the user device.

14. A storage medium, storing computer instructions; wherein the computer instructions are configured to cause a computer to execute the method of any one of claims 1 to 10.

15. A computer program product, comprising computer program instructions, wherein a computer executes the computer program instructions, to implement the method of any one of claims 1 to 10.

Tablet-sharing
(user 1)

First mutual trust ring

TV-sharing
(user 1)

Mobile phone
(user 1)

Second mutual
trust ring

Mobile phone
(user 2)

Notebook-sharing
(user 2)

FIG. 1

First
member
device

Server

Second
member
device

Third
member
device

Step 200, send a team account
creation request

Step 201, return a target team
certificate

Step 202, send a team
invitation notification

Step 203, send a team joining
request

Step 205, send a team
information update
notification

Step 204, return an updated
target team certificate

Step 206, send a team
information update request

Step 207, return the updated
target team certificate

Step 208, send the team
information update
notification

Step 209, send a team
information acquiring request

Step 210, return the updated
target team certificate

FIG. 2

300

Obtain, by the user device and in response to that a connection request message sent by a target device is received, a first team account for the target device according to the connection request message

301

When the first team account matches a second team account for the user device, obtain a first device role of the target device

302

When determining that the first device role and a second device role of the user device meet a role combination condition, send response information to the target device to execute device authentication

303

When determining that the device authentication succeeds, create a sharing connection with the target device

FIG. 3

| Target device (Controlee) | | User device (Controller) |
|---|---|---|

Step 400, configure a team account filter

Step 401, send one or more connection request messages

Step 402, screen out a connection request message matching the team account

Step 403, obtain a first device role of the target device

Step 404, when the first device role indicates a controlee, execute device authentication and sharing connection

FIG. 4

Target device
(Controller)

User device
(Controlee)

Step 500, configure a team account filter

Step 501, send one or more connection request messages

Step 502, screen out a connection request message matching the team account

Step 503, obtain a first device role of the target device

Step 504, when the first device role indicates a controller, execute device authentication and sharing connection

FIG. 5

```
┌─────────────────┐                              ┌─────────────────┐
│  Target device  │                              │   User device   │
└─────────────────┘                              └─────────────────┘
```

Step 600, send a connection request message

Step 601,
when it is determined,
according to the connection
request message, that a
certificate update condition is
met, update the second team
certificate.

step 602, send a response message

Step 603,
when it is determined,
according to the connection
request message, that the
certificate update condition is
met, update the first team
certificate.

Step 604, return a response message

FIG. 6

FIG. 7

EP 4 576 670 A1

FIG. 8

FIG. 9

FIG. 10

1100

1130

1110

Power supply

Processor

Memory

1120

Touch panel

1151

Input unit

1150

Other input device

1140

Display panel

1141

Display unit

1152

FIG. 11

Europäisches
Patentamt
European
Patent Office
Office européen
des brevets

# EUROPEAN SEARCH REPORT

**Application Number**

EP 24 20 7355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 515 133 A (HUAWEI TECH CO LTD) 23 December 2022 (2022-12-23) | 1,2,4, 6-8,10, 11,13-15 | INV. H04L9/40 |
| Y | * page 1 pargraph 2, 5; page 2 paragraph 3; page 9 parapgraph 3; claim 3 * | 3,5,9,12 | ADD. H04L9/32 |
| | ----- | | |
| Y | US 2006/174121 A1 (OMAE KOJI [JP] ET AL) 3 August 2006 (2006-08-03) * paragraph 0055; figures 5,6 * | 3,5,9,12 | |
| | ----- | | |

**TECHNICAL FIELDS SEARCHED (IPC)**

H04L

The present search report has been drawn up for all claims

| Place of search | Date of completion of the search | Examiner |
|---|---|---|
| Munich | 22 November 2024 | Lindner, Jonas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 7355

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2024

| Patent document cited in search report | | Publication date | Patent family member(s) | | Publication date |
|---|---|---|---|---|---|
| CN 115515133 | A | 23-12-2022 | NONE | | |
| US 2006174121 | A1 | 03-08-2006 | CN | 1805332 A | 19-07-2006 |
| | | | EP | 1679843 A1 | 12-07-2006 |
| | | | JP | 4756865 B2 | 24-08-2011 |
| | | | JP | 2006197025 A | 27-07-2006 |
| | | | US | 2006174121 A1 | 03-08-2006 |

EPO FORM P0459

For more details about this annex : see Official Journal of the European Patent Office, No. 12/82